(19) Europäisches Patentamt
European Patent Office
Office européen des brevets

(11) Veröffentlichungsnummer: **0 367 013 A1**

(12) # EUROPÄISCHE PATENTANMELDUNG

(21) Anmeldenummer: **89119206.4**

(22) Anmeldetag: **17.10.89**

(51) Int. Cl.5: **C08L 67/02 , C08L 51/08**

(30) Priorität: **29.10.88 DE 3836900**

(43) Veröffentlichungstag der Anmeldung: **09.05.90 Patentblatt 90/19**

(84) Benannte Vertragsstaaten: **DE FR GB IT**

(71) Anmelder: **BAYER AG**

**D-5090 Leverkusen 1 Bayerwerk(DE)**

(72) Erfinder: **Eckel, Thomas, Dr.**
**Gneisenaustrasse 15 a**
**D-4047 Dormagen 1(DE)**
Erfinder: **Wittmann, Dieter, Dr.**
**Wolfskaul 4**
**D-5000 Koeln 80(DE)**
Erfinder: **Ott, Karl-Heinz, Dr.**
**Paul-Klee-Strasse 54**
**D-5090 Leverkusen 1(DE)**
Erfinder: **Peters, Horst, Dr.**
**Winterbergstrasse 25**
**D-5090 Leverkusen(DE)**
Erfinder: **Schoeps, Jochen, Dr.**
**Windmühlenstrasse 126**
**D-4150 Krefeld(DE)**

(54) **Formmassen aus Polyestercarbonat, Polyalkylenterephthalat und gepfropftem Silikonkautschuk.**

(57) Die vorliegende Erfindung betrifft thermoplastische Formmassen auf Basis von aromatischen Polyestercarbonaten, Polyalkylenterephthalaten und speziell gepfropften Silikonkautschuken, ein Verfahren zu ihrer Herstellung durch Mischen der Komponenten bei erhöhter Temperatur und ihre Verwendung zur Herstellung von Formkörpern, vornehmlich durch Spritzguß.

EP 0 367 013 A1

## Formmassen aus Polyestercarbonat, Polyalkylenterephthalat und gepfropftem Silikonkautschuk

Die vorliegende Erfindung betrifft thermoplastische Formmassen auf Basis von Polyestercarbonaten, Polyalkylenterephthalaten und speziell gepfropften Silikonkautschuken, ein Verfahren zu ihrer Herstellung durch Mischen der Komponenten bei erhöhter Temperatur und ihre Verwendung zur Herstellung von Formkörpern, vornehmlich durch Spritzguß.

Aromatische Polyestercarbonate zeichnen sich gegenüber aromatischen Polycarbonaten durch deutlich höhere Wärmeformbeständigkeit aus.

Mischungen aus aromatischen Polyestercarbonaten, Polyalkylenterephthalaten und Kautschukmodifikatoren sind bekannt.

In EP 0 135 779 werden schlagzähe Mischungen aus aromatischen Polyestercarbonaten, Polyalkylenterephthalaten und Pfropfpolymerisaten von Vinylmonomeren, wie vorzugsweise Methylmethacrylat, auf Butadienkautschuk beschrieben.

Gemäß EP 0 155 989 und US 4 677 150 verleihen Pfropfpolymerisate von Vinylmonomeren auf Acrylatkautschuk Polyestercarbonat/Polyalkylenterephthalat-Formmassen neben einer sehr guten Raumtemperaturzähigkeit auch gute Witterungsstabilität.

Für viele Anwendungsbereiche, insbesondere für Außenanwendungen im Kfz-Sektor, besitzen jedoch die oben erwähnten Formmassen eine unzureichende Eigenschaftskombination aus Tieftemperaturzähigkeit und Witterungsstabilität.

Zwar läßt sich beispielsweise mit Kautschukmodifikatoren auf der Basis von Butadienkautschuken ein für viele Anwendungen ausreichendes Niveau der Kältezähigkeit von Polyestercarbonat/Polyalkylenterephthalat-Formmassen erzielen; jedoch zeigen sich bei Verwendung solcher Formmassen als klimaexponierte Außenteile die bekannten Nachteile hinsichtlich Oxidationsempfindlichkeit und Witterungsstabilität der Butadienkautschukkomponente (Verfärbung, kontinuierlicher Abfall der Zähigkeit).

Durch den Einsatz von Acrylatkautschukmodifikatoren kann die Witterungsstabilität von solchen Formmassen zwar deutlich verbessert werden, jedoch nur auf Kosten einer beträchtlich reduzierten Tieftemperaturzähigkeit.

Die technische Aufgabe, witterungsstabile und gleichzeitig tieftemperaturzähe Polyestercarbonat/Polyalkylenterephthalat-Formmassen herzustellen, wird durch Verwendung der erfindungsgemäßen Modifikatorkomponente C auf Basis spezieller Silikonkautschuke gelöst.

Gegenstand der vorliegenden Erfindung sind thermoplastische Formmassen, enthaltend

A.

5 - 99 Gew.-Tl., vorzugsweise 10 - 95 Gew.-Tl., besonders bevorzugt 50 - 90 Gew.-Tl. eines oder mehrerer thermoplastischer aromatischer Polyester carbonate,

B.

1 - 95 Gew.-Tl., vorzugsweise 5 - 90 Gew.-Tl., besonders bevorzugt 10 - 50 Gew.-Tl. eines oder mehrerer thermoplastischer Polyalkylenterephthalate,
und

C.

1 - 90 Gew.-Tl., vorzugsweise 3 - 50 Gew.-Tl., besonders bevorzugt 5 - 35 Gew.-Tl. eines oder mehrerer Pfropfpolymerisate aus

C.1

5 - 90 Gew.-Tl., vorzugsweise 20 - 80 Gew.-Tl. einer Mischung aus

C.1.1

50 - 95 Gew.-Tl. Styrol, α-Methylstyrol, kernsubstituiertem Styrol, Methylmethacrylat oder Mischungen daraus, und

C.1.2

50 - 5 Gew.-Tl. Acrylnitril, Methacrylnitril, Methylmethacrylat, Maleinsäureanhydrid, N-substituiertem Maleinimid oder Mischungen daraus, auf

C.2

10 - 95, vorzugsweise 20 - 80 Gew.-Tl. Silikonkautschuk mit einem mittleren Teilchendurchmesser $d_{50}$ von 0,09 bis 1, vorzugsweise 0,09 bis 0,4 µm und einem Gelgehalt von mehr als 50, vorzugsweise mehr als 70, insbesondere 73 - 98 Gew.-%, bezogen auf C.2, erhältlich aus

a. Dihalogendiorganosilan,

b. 0 - 10 Mol-%, bezogen auf a, Trihalogenorganosilan,

c. 0 - 3 Mol-%, bezogen auf a, Tetrahalogensilan und

d. 0 - 0,5 Mol-%, bezogen auf a, Halogentriorganosilan, wobei die Organylreste der Verbindungen a, b und d.

α) $C_1$-$C_6$-Alkyl oder Cycloalkyl, vorzugsweise Methyl, Ethyl,

β) $C_{6-12}$-Aryl, vorzugsweise Phenyl,

γ) $C_1$-$C_6$-Alkenyl, vorzugsweise Vinyl, Allyl, und

δ) Mercapto-$C_1$-$C_6$-alkyl, vorzugsweise Mercaptopropyl, bedeuten können, mit der Maßgabe, daß die Summe (γ + δ) 2 - 10 Mol-%, bezogen auf alle Organylreste der Verbindungen a, b und d, und das Molverhältnis γ : δ (3 : 1) bis (1 : 3), vorzugsweise (2 : 1) bis (1 : 2), betragen, wobei die Summe der Gew.-Tl. aus A + B + C jeweils 100 Gew.-Tl. ergeben muß.

<u>Komponente A</u>

Vollaromatische Polyestercarbonate A im Sinne der Erfindung sind überwiegend bis ausschließlich aus aromatischen $C_8$-$C_{14}$-Dicarbonsäuren, $C_6$-$C_{30}$-Diphenolen und Kohlensäurederivaten, z.B. Phosgen, aufgebaut.

Bevorzugte aromatische Dicarbonsäuren sind beispielsweise: Isophthalsäure, Terephthalsäure, Diphenylether-4,4′-dicarbonsäure und Naphthalin-2,6-dicarbonsäure. Besonders bevorzugt sind Iso- und Terephthalsäure. Bevorzugtes Kohlensäurederivat ist Phosgen.

Bevorzugte Diphenole für die Herstellung der vollaromatischen Polyestercarbonate A sind Verbindungen der Formel I:

HO - Z - OH (I),

worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel II

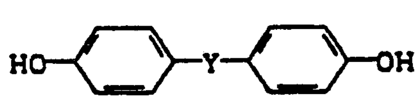

(II)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-,

$-\underset{\underset{O}{\|}}{S}-$, $-SO_2-$ oder $-\underset{\underset{O}{\|}}{C}-$

sowie deren kernalkylierte und kernhalogenierte Derivate bedeutet.

Beispielsweise seien genannt: Hydrochinon, Resorcin, Dihydroxydiphenyle, Bis-(hydroxyphenyl)-alkane, Bis-(hydroxyphenyl)-cycloalkane, Bis-(hydroxyphenyl)-ether, Bis-(hydroxyphenyl)-ketone, Bis-(hydroxyphenyl)-sulfoxide, Bis-(hyroxyphenyl)-sulfone und/oder A,A′-Bis-(hydroxyphenyl)-diisopropylbenzole sowie deren kernalkylierte und/oder kernhalogenierte Derivate.

Bevorzugte Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4′-Dihydroxydiphenylsulfid, 4,4′-Dihydroxydiphenylsulfon sowie deren di- und tetrahalogenierte Derivate. Besonders bevorzugt ist Bisphenol A.

Mögliche Verzweigungsmittel sind in den DE-OS 2 940 024 und 3 007 934 genannt.

Als Kettenabbrecher für die vollaromatischen Polyestercarbonate A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht.

Beim Aufbau der vollaromatischen Polyestercarbonate A können auch bis jeweils 30 Mol-%, bevorzugt 0 bis 20 Mol-%, der Dicarbonsäuren und Dihydroxyverbindungen durch aliphatische Baugruppen, z.B. Adipinsäure oder Butandiol-1,4, ersetzt sein.

Weiterhin können die vollaromatischen Polyestercarbonate A teilweise aus aromatischen Hydroxycarbonsäuren, z.B. p-Hydroxy-benzoesäure, aufgebaut sein. Der Anteil solcher Hydroxycarbonsäuren kann bis 100 Mol-%, bevorzugt 30 bis 50 Mol-% (bezogen auf Bisphenol), betragen.

Falls Iso- und Terephthalsäure gemeinsam am Aufbau der vollaromatischen Polyestercarbonate A beteiligt sind, kann der Terephthalsäureanteil 1 bis 99 %, bevorzugt 25 bis 75 % des Gesamtesteranteiles betragen.

Die vollaromatischen Polyestercarbonate können 1 bis 99 Mol-%, insbesondere 30 bis 80 Mol-% Estergruppe, bezogen auf die Summe von Ester und Carbonatgruppen, enthalten.

Sowohl der Ester- als auch der Carbonatanteil der vollaromatischen Polyestercarbonate A kann in Form von Blöcken oder statistisch verteilt im Polykondensat vorliegen.

Die Herstellung der vollaromatischen Polyestercarbonate A ist bekannt und z.B. in den DE-OS 1 495 626, 2 232 877, 2 703 376, 3 000 610, 2 714 544, 2 940 024 und 3 007 934 beschrieben. Besonders bevorzugt ist das Phasengrenzflächenverfahren.

Die relative Lösungsviskosität ($\eta_{rel}$) der vollaromatischen Polyestercarbonate A liegt im Bereich von 1,18 bis 1,4, vorzugsweise 1,22 bis 1,3 (gemessen an Lösungen von 0,5 g Polyestercarbonat A in 100 ml $CH_2Cl_2$-Lösung bei 25 °C).

Ein gewünschter Carbonatgruppengehalt kann auch durch Mischen von vollaromatischem Polyestercarbonat mit aromatischem Polycarbonat eingestellt werden. Das bedeutet, daß eine erfindungsgemäße Komponente A auch dann vorliegt, wenn das vollaromatische Polyestercarbonat teilweise, d.h. zu 5 bis 35 Gew.-%, vorzugsweise 10 bis 50 Gew.-% durch ein aromatische Polycarbonat ersetzt wird.

Als aromatische Polycarbonate können Homopolycarbonate und Copolycarbonate eingesetzt werden. Diese sind z.B. in US-PS 2 999 835, GB-PS 772 627 und DE-OS 3 334 872 beschrieben.

<u>Komponente B</u>

Polyalkylenterephthalate gemäß Komponente B im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen dieser Reaktionsprodukte.

Bevorzugte Polyalkylenterephthalate gemäß Komponente B lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate gemäß Komponente B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate B können neben Terephthalsäureresten bis zu 20 Mol-%

Reste anderer aromatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4′-Diphenyldicarbonsäure, Bernstein-, Adipin-, Sebacin-, Azelain- oder Cyclohexandiessigsäure.

Die bevorzugten Polyalkylenterephthalate B können neben Ethylenglykol- bzw. Butandiol-1,4-Resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di(ß-hydroxyethoxy)-benzol, 2,2-Bis-(4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate gemäß Komponente B können durch Einbau relativ kleiner Mengen 3- oder 4-wertiger Alkohole oder 3- oder 4-basiger Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate B, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate B sind auch Copolyester, die aus mindestens zwei der obengenannten Alkoholkomponenten hergestellt sind; besonders bevorzugte Copolyester sind Poly-(ethylenglykol/butandiol-1,4)-terephthalate.

Die als Komponente B vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1 : 1 Gew.-Tl.) bei 25 °C.

Komponente C

Bevorzugte Silikonkautschuke C.2 sind solche, deren Organylrese zu mindestens 80 Mol-% aus Methylgruppen bestehen.

Als Endgruppe fungiert im allgemeinen eine Diorganylhydroxyl-siloxy-Einheit, vorzugsweise eine Dimethylhydroxysiloxy-Einheit.

Für die Herstellung der Silikonkautschuke C.2 bevorzugte Silane a bis d enthalten als Halogensubstituenten Chlor.

"Erhältlich" im Sinne der Erfindung bedeutet, daß der Silikonkautschuk C.2 nicht unbedingt aus den Halogenverbindungen a bis d hergestellt werden muß. Die Definition umfaßt vielmehr auch Silikonkautschuke C.2 gleicher Struktur, die aus Silanen mit anderen hydrolysierbaren Gruppen, wie z.B. $C_1$-$C_6$-Alkoxygruppen, oder aus cyclischen Siloxanoligomeren hergestellt worden sind.

Die Herstellung der erfindungsgemäßen Pfropfpolymerisate C kann beispielsweise nach einem Verfahren, das in 3 Stufen durchgeführt wird, erfolgen:

In der ersten Stufe werden literaturbekannte Monomere wie beispielsweise Dimethyldichlorsilen oder Vinylmethyldichlorsilan sowie Dichlorsilane mit anderen Sub stituenten zu den leicht zugänglichen und durch Destillation einfach zu reinigenden cyclischen Oligomeren Octamethyltetrasiloxan oder Tetravinyltetramethyltetrasiloxan umgesetzt (Chem. in uns. Zeit 4 (1987), 121 -127).

In der zweiten Stufe werden aus diesen ebenfalls literaturbekannten cyclischen Oligomeren unter Zugabe von γ-Mercaptopropylmethyldimethoxysilan durch ringöffnende kationische Polymerisation die vernetzten Silikonkautschuke C.2 erhalten.

In der dritten Stufe werden die erhaltenen Silikonkautschuke C.2, die über pfropfaktive Vinyl- und Mercaptogruppen verfügen, mit Vinylmonomeren oder Vinylmonomermischungen radikalisch gepfropft. Eine detaillierte Beschreibung der zweiten und dritten Synthesestufe wird in den folgenden Abschnitten gegeben.

Vorzugsweise geht man in der zweiten Synthesestufe so vor, daß Mischungen aus cyclischen Siloxanoligomeren wie beispielsweise Octamethyltetrasiloxan und Tetramethyltetravinyltetrasiloxan in Emulsion ringöffnend kationisch in Gegenwart von Sulfonsäuren polymerisiert werden. Die entstehenden teilchenförmigen Silikonkautschuke fallen in Emulsion an.

Besonders bevorzugt in der zweiten Stufe ist das Verfahren gemäß GB-PS 1 024 024, das Alkylbenzolsulfonsäuren einsetzt, die sowohl katalytisch als auch als

Emulgator wirksam sind. Nach erfolgter Polymerisation wird die Säure neutralisiert. Anstelle der

genannten Alkylbenzolsulfonsäuren können aber auch n-Alkylsulfonsäuren eingesetzt werden. Es ist weiterhin möglich, neben der katalytisch wirksamen Sulfonsäure auch zusätzlich Co-Emulgatoren einzusetzen.

Derartige Co-Emulgatoren können nichtionischer sowie anionischer Natur sein. Als anionishe Co-Emulgatoren kommen insbesondere Salze der obengenannten n-Alkyl-oder Alkylbenzolsulfonsäuren in Frage. Nichtionogene Co-Emulgatoren sind Polyoxyethylenderivate von Fettalkoholen und Fettsäure. Beispiele für derartige Emulgiermittel sind POE (3)-Laurylalkohol, POS (20)-Oleylalkohol, POE (7)-Nonylphenol oder POS (10)-Stearat. (Die Schreibweise POS (x)-Laurylalkohol bedeutet, daß an ein Molekül Laurylalkohol X Einheiten Ethylenoxid addiert worden sind, wobei die Zahl X einen Mittelwert darstellt.)

Die vernetzungs- und pfropfaktiven Gruppen $\gamma$ und $\delta$ können in das Silikonpolymer durch Arbeiten in Anwesenheit geeigneter Siloxanoligomerer eingefügt werden. Geeignete Ausgangsoligomere sind z.B. Tetramethyltetravinylcyclotetrasiloxan oder $\gamma$-Mercaptopropylmethyldimethoxysilan oder dessen Hydrolysat.

Diese funktionellen Oligomeren werden dem Hauptoligomer, z.B. Octamethylcyclotetrasiloxan, bei der zweiten Reaktionsstufe in den gewünschten Mengen beigefügt.

Analog kann auch der Einbau längerkettiger Alkylreste, wie z.B. Ethyl, Propyl oder dergleichen bzw. der Einbau von Phenylgruppen erreicht werden.

Eine ausreichende Vernetzung des Silikonkautschuks kann schon erreicht werden, wenn die Reste $\gamma$ und $\delta$ bei der Emulsionspolymerisation miteinander reagieren, so daß die Zugabe eines externen Vernetzers entbehrlich sein kann. Jedoch kann ein Vernetzung bewirkendes Silan zugefügt werden, um den Vernetzungsgrad des Silikonkautschukes zu erhöhen.

Verzweigungen oder Vernetzungen können durch Zugabe von z.B. Tetraethoxysilan oder eines Silans der allgemeinen Formel Organyl-$SiX_3$, wobei X eine hydrolysierbare Gruppe, insbesondere den Alkoxy- oder Halogenrest, darstellt, erzielt werden. Insbesondere bevorzugt sind neben Tetraethoxysilan Methyltrimethoxysilan oder Phenyltrimethoxysilan.

Der mittlere Teilchendurchmesser der Silikonkautschuke $d_{50}$ ist der Durchmesser, oberhalb und unterhalb dessen jeweils 50 Gew.-% der Teilchen liegt. Er kann mittels Ultrazentrifugen-Messungen (W. Scholtan, H. Lange, Kolloid. Z. und Z. Polymere 250 (1972), 782 bis 796) bis 796) bestimmt werden.

Der Gelgehalt wird bei 25 °C in Aceton bestimmt (vgl. DE-AS 2 421 288, Sp. 6, Z. 17 - 37). Er beträgt bei den er findungsgemäßen Silikonkautschuken mindestens 70, vorzugsweise 73 bis 98 Gew.-%.

Die Pfropfpolymerisate C können durch radikalische Pfropfpolymerisation, beispielsweise analog DE-PS 2 421 288, hergestellt werden.

Zur Herstellung des Pfropfcopolymerisates C in der dritten Synthesestufe können die Pfropfmonomeren C.1.1 und/oder C.1.2 in Anwesenheit des Silikonkautschukes C.2 radikalisch pfropfpolymerisiert werden, insbesondere bei 40 bis 90 °C. Die Pfropfpolymerisation kann in Suspension, Dispersion oder Emulsion durchgeführt werden. Bevorzugt ist die kontinuierliche oder diskontinuierliche Emulsionspfropfpolymerisation. Diese Pfropfpolymerisation wird unter Einsatz von Radikalinitiatoren durchgeführt (aus der Gruppe der Peroxide, Azoverbindungen, Hydroperoxide, Persulfate, Perphosphate) sowie auch gegebenenfalls unter Einsatz von anionischen Emulgatoren, z.B. Carboxoniumsalzen, Sulfonsäuresalzen oder organischen Sulfaten. Dabei bilden sich Propfpolymerisate mit hohen Pfropfausbeuten, d.h. ein großer Anteil des Polymerisates der Monomeren C.1 wird an den Silikonkautschuk C.2 chemisch gebunden. Dieser besondere Silikonkautschuk C.2 macht besondere Maßnahmen, die eine hohe Pfropfung ermöglichen, überflüssig.

Die erfindungsgemäßen Pfropfpolymerisate C sind solche, die man durch Pfropfpolymerisation von 5 bis 90, vorzugsweise 20 bis 80 Gewichtsteilen eine Vinylmonomeren oder eines Vinylmonomerengemisches auf 10 bis 95, vorzugsweise 20 bis 80 Gew.-Tl. Silikonkautschuk C.2 erhält.

Als besonders bevorzugtes Vinylmonomeres wird Methylmethacrylat genannt. Erfindungsgemäße Vinylmonomerenmischungen bestehen aus 50 bis 95 Gew.-Tl. Styrol, $\alpha$-Methylstyrol (oder anderen Alkyl- oder halogenkernsubstituierten Styrolen) oder Methylmethacrylat einerseits und aus 5 bis 50 Gew.-Tl. Acrylnitril, Methacrylnitril, Methylmethacrylat, Maleinsäureanhydrid oder substituierten Maleinimiden andererseits.

Bevorzugte Copolymerisate zum Aufbau der Pfropfhülle bestehen aus Styrol/Acrylnitril oder Styrol/Maleinsäureanhydrid. Als weitere Vinylmonomerkomponenten können zusätzlich in kleinen Mengen Acrylsäureester von primären oder sekundären aliphatischen $C_2$-$C_{10}$-Alkoholen, vorzugsweise n-Butylacrylat, oder Acryl- oder Methacrylsäureester des tert.-Butanols, vorzugsweise t-Butylacrylat, anwesend sein.

Die so hergestellten Pfropfpolymerisate C können nach bekannten Verfahren aufgearbeitet werden, z.B. durch Koagulation der Latices mit Elektrolyten (Salzen, Säuren oder Gemischen davon) und anschließende Reinigung und Trocknung.

Bei der Herstellung der Pfropfpolymerisate C durch Pfropfcopolymerisation bilden sich im allgemeinen neben dem eigentlichen Pfropfcopolymerisat in bestimmtem Ausmaß auch freie Polymerisate bzw. Copolymerisate der die Pfropfhülle bildende Pfropfmonomeren.

Pfropfpolymerisate C im Sinne der Erfindung sind deshalb durch Polymerisation der Pfropfmonomeren C.1 in Gegenwart des Silikonkautschukes C.2 erhaltene Produkte, genau genommen also im allgemeinen ein Gemisch aus Pfropfcopolymerisat und freiem (Co-)Polymerisat der Pfropfmonomeren C.1.

Die erfindungsgemäßen Formmassen weisen optimale Eigenschaften auf, wenn die Menge an freiem (Co-)Polymerisat 50, vorzugsweise 30, insbesondere 20 Gew.-%, bezogen auf Komponente C, nicht übersteigt.

Die erfindungsgemäßen Formmassen können weitere, für aromatische Polycarbonate, Polyestercarbonate und Polyalkylenterephthalate sowie für Pfropfpolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350° C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen, enthaltend die Komponenten A, B, C und gegebenenfalls Stabilisatoren, Pigmente, Entformungsmittel, Flammschutzmittel und/oder Antistatika, das dadurch gekennzeichnet ist, daß man die Komponenten A, B, C und gegebenenfalls Stabilisatoren, Pigmente, Entformungsmittel, Flammschutzmittel und/oder Antistatika in bekannter Weise vermischt und bei erhöhten Temperaturen, vorzugsweise bei Temperaturen von 200 bis 350° C, in üblichen Vorrichtungen, wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

1. In den Beispielen verwendete Komponenten

### Komponente A

Polyestercarbonat mit einem Esteranteil von 50 Mol-% auf Basis von Bisphenol A, Iso- und Terephthalsäure (1:1) mit 3 Mol-%, bezogen auf Bisphenol A-Einheiten, p-Isooctylphenyl-Endgruppen mit einer relativen Viskosität $\eta_{rel}$ von 1,30 (gemessen in einer Lösung von 0,5 g Polyestercarbonat in 100 ml $CH_2Cl_2$ bei 25° C).

### Komponente B

Lineares Polyethylenterephthalat mit einer Intrinsic-Viskosität I. V. = 0,85 dl/g, gemessen in Phenol/o-Dichlorbenzol (1:1) bei 25° C, und einer Konzentration von 0,5 g/dl.

### Komponente C

a. Herstellung der Silikonkautschukemulsion C.2

38,5 Gew.-Tl. Octamethylcyclotetrasiloxan, 1,2 Gew.-Tl. Tetramethyltetravinylcyclotetrasiloxan und 1 Gew.-Tl. $\gamma$-Mercaptopropylmethyldimethylsiloxan werden miteinander verrührt. 0,5 Gew.-Tl. Dodecylbenzolsulfonsäure werden zugefügt, anschließend 58,4 Gew.-Tl. Wasser innerhalb 1 Stunde zugegeben. Dabei wird intensiv gerührt. Die Voremulsion wird mit Hilfe einer Hochdruckemulgiermaschine zweimal bei 20 bar homogenisiert. Man gibt weitere 0,5 Gew.-Tl. Dodecylbenzolsulfonsäure hinzu.

b. Herstellung der Pfropfpolymerisate C

In einem Reaktor werden vorgelegt:
2107 Gew.-Tl. Latex C.2
1073 Gew.-Tl. Wasser

Nach Initiierung mittels einer Lösung von 7,5 Gew.-Tl. Kaliumperoxodisulfat in 195 Gew.-Tl. Wasser bei 65 °C werden folgende Lösungen zur Herstellung der Pfropfkautschuke $C_1$ und $C_2$ in den Reaktor innerhalb von 4 Std. gleichmäßig eingespeist.

| $C_1$: | |
|---|---|
| Lösung 1: | 540 Gew.-Tl. Styrol<br>210 Gew.-Tl. Acrylnitril |
| Lösung 2: | 375 Gew.-Tl. Wasser<br>15 Gew.-Tl. Natriumsalz von $C_{14}$-$C_{18}$-Alkylsulfonsäuren |

| $C_2$: | |
|---|---|
| Lösung 1: | 750 Gew.-Tl. Methylmethacrylat |
| Lösung 2: | 375 Gew.-Tl. Wasser und<br>15 Gew.-Tl. Natriumsalz von $C_{14}$-$C_{18}$-Alkylsulfonsäuren |

Anschließend wird jeweils innerhalb von 6 Std. bei 65 °C auspolymerisiert. Es resultiert ein Latex mit einem Feststoffgehalt von ca. 33 Gew.-%.

Nach Koagulation mit einer wäßrigen Magnesiumchlorid/Essigsäure-Lösung, Filtration und Trocknung im Vakuum wird das Pfropfpolymerisat in Form eines weißen Pulvers erhalten.

2. Herstellung und Prüfung der erfindungsgemäßen Formmassen

Die Komponenten A, B und C werden auf einem 3,0-1-Innenkneter bei Temperaturen zwischen 200 und 250 °C aufgeschmolzen und homogenisiert.

Von den Formmassen werden auf einer Spritzgußmaschine Stäbe der Abmessung 80 x 10 x 4 mm (Verarbeitungstemperatur: 260 °C) hergestellt, an denen die Kerbschlagzähigkeit (nach Methode ISO 180) bei Raumtemperatur, 0 °C, -20 °C, -40 °C und -60 °C gemessen wird.

Daraus wurde der Zäh-Spröd-Übergang bestimmt, d.h. jener Temperaturbereich, in dem die ersten Sprödbrüche auftreten.

Die Bestimmung der Wärmeformbeständigkeit nach Vicat B erfolgte gemäß DIN 53 460.

Wie nachfolgende Tabelle zeigt, werden erfindungsgemäß (Beispiel 2) Formmassen erhalten, die bei gleichem Polyestercarbonat-, Polyethylenterephthalat- und Kautschukgehalt gegenüber dem Vergleichsbeispiel 1 sowohl ein höheres Niveau der Kerbschlagzähigkeit bei Raumtemperatur als auch bei tiefen Temperaturen besitzen. Bei den erfindungsgemäßen Beispielen 2-4 ist der Zäh/Spröd-Übergang nach wesentlich tieferen Temperaturen verschoben. Auch die Wärmeformbeständigkeit, ausgedrückt durch den Vicat B-Wert, liegt auf höherem Niveau als bei Vergleichsbeispiel 1.

Tabelle:

| Zusammensetzung und Eigenschaften der Formmassen | | | | | | | | |
|---|---|---|---|---|---|---|---|---|
| Beispiel | A | B | $C_1$ | $C_2$ | C* | Kerbschlagzähigkeit $a_K$ bei RT $kJ/m^2$ | Zäh-/Spröd-Übergang °C | Vicat B DIN °C |
| | (Gew.-%) | | | | | | | |
| 1 (Vergleich) | 60 | 20 | - | - | 20 | 32,8 | RT | 134 |
| 2 | 60 | 20 | - | 20 | - | 44,7 | <-50 | 138 |
| 3 | 64 | 21 | - | 15 | - | 67,0 | -30/-40 | 142 |
| 4 | 65 | 20 | 15 | - | - | 48,0 | -20/-30 | 145 |

C* Pfropfpolymerisat von 50 Gew.-Tl. eines Copolymerisates aus Stryol und Acrylnitril im Verhältnis 72:28 auf 50 Gew.-Tl. teilchemförmigen Polybutadienkautschuk (Teilchengröße $d_{50}$:0,4 µm), hergestellt durch Emuls onspolymerisation

## Ansprüche

1. Thermoplastische Formmassen, enthaltend

A.

5 - 99 Gew.-Tl. eines oder mehrerer thermoplastischer aromatischer Polyestercarbonate,

B.

1 - 95 Gew.-Tl. eines oder mehrerer thermoplastischer Polyalkylenterephthalate,

C.

1 - 90 Gew.-Tl. eines oder mehrerer Pfropfpolymerisate aus

C.1

5 - 90 Gew.-Tl. einer Mischung aus

C.1.1

50 - 95 Gew.-Tl. Styrol, α-Methylstyrol, kernsubstituiertem Styrol, Methylmethacrylat oder Mischungen daraus, und

C.1.2

50 - 5 Gew.-Tl. Acrylnitril, Methacrylnitril, Methylmethacrylat, Maleinsäureanhydrid, N-substituiertem Maleinimid oder Mischungen daraus, auf

C.2

30 - 95 Gew.-Tl. Silikonkautschuk mit einem mittleren Teilchendurchmesser $d_{50}$ von 0,09 bis 1 µm, und einem Gelgehalt von mehr als 50, vorzugsweise mehr, bezogen auf C.2, erhältlich aus
a. Dihalogendiorganosilan,
b. 0 - 10 Mol-%, bezogen auf a, Trihalogenorganosilan,
c. 0 - 3 Mol-%, bezogen auf a, Tetrahalogensilan und
d. 0 - 0,5 Mol-%, bezogen auf a, Halogentriorganosilan, wobei die Organylreste der Verbindungen a, b und

d ˙

α) $C_1$-$C_6$-Alkyl oder Cycloalkyl, vorzugsweise Methyl, Ethyl,

β) $C_{6-12}$-Aryl, vorzugsweise Phenyl,

γ) $C_1$-$C_6$-Alkenyl, vorzugsweise Vinyl, Allyl, und

δ) Mercapto-$C_1$-$C_6$-alkyl, vorzugsweise Mercaptopropyl,

bedeuten können, mit der Maßgabe, daß die Summe (γ + δ) 2 - 10 Mol-%, bezogen auf alle Organylreste der Verbindungen a, b und d, und das Molverhältnis γ : δ (3 : 1) bis (1 : 3), vorzugsweise (2 : 1) bis (1 : 2), betragen, wobei die Summe der Gew.-Tl. aus A + B + C jeweils 100 Gew.-Tl. ergeben muß.

2. Formmassen gemäß Anspruch 1, dadurch gekennzeichnet, daß das aromatische Polyestercarbonat gemäß Komponente A zu 5 bis 95 Gew.-% durch ein aromatisches Polycarbonat ersetzt werden kann.

3. Formmassen gemäß Anspruch 1, dadurch gekennzeichnet, daß das Silikonpfropfpolymerisat C aus 20 bis 80 Gew.-Tl. Pfropfmonomeren C.1.1 und C.1.2 und 20 bis 80 Gew.-Tl. Silikonkautschuk C.2 hergestellt wird.

4. Formmassen gemäß Anspruch 1, dadurch gekennzeichnet, daß der Teilchendurchmesser $d_{50}$ des Silikonkautschuks C.2 0,09 bis 0,4 µm beträgt.

5. Formmassen gemäß Anspruch 1, dadurch gekennzeichnet, daß der Gelgehalt des Silikonkautschuks C.2 mehr als 70 Gew.-% beträgt.

6. Formmassen gemäß Anspruch 1, dadurch gekennzeichnet, daß der Gelgehalt des Silikonkautschuks C.2 73 bis 98 Gew.-% beträgt.

7. Formmassen gemäß Anspruch 1, dadurch gekennzeichnet, daß von den Organylresten der Komponenten a, b und d mindestens 80 Mol-% Methyl der Gruppe α sit, die Reste γ Vinyl- und/oder Alkylgruppen und die Reste δ Mercaptopropylreste sind.

8. Formmassen gemäß Anspruch 1, dadurch gekennzeichnet, daß sie zusätzlich mindestens einen Zusatz, ausgewählt aus der Gruppe der Stabilisatoren, Pigmente, Entformungsmittel, Flammschutzmittel und Antistatika, enthalten.

9. Verfahren zur Herstellung der Formmassen nach Anspruch 1, dadurch gekennzeichnet, daß man die Komponenten A, B, C und gegebenenfalls Stabilisatoren, Pigmente, Entformungsmittel, Flammschutzmittel und/oder Antistatika in bekannter Weise vermischt und bei erhöhter Temperatur in üblichen Vorrichtungen schmelzcompoundiert oder schmelzextrudiert.

10. Verwendung der Formmassen nach Anspruch 1 zur Herstellung von Formkörpern.

Europäisches Patentamt

# EUROPÄISCHER RECHERCHENBERICHT

Nummer der Anmeldung

EP 89119206.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE - A1 - 2 659 357 (BASF AG) * Anspruch; Seite 6, Zeilen 1-18; Seite 7, Zeilen 4-10; Seite 8, Zeilen 16-35; Seite 10, Zeile 31 - Seite 11, Zeile 33 * -- | 1-3, 8-10 | C 08 L 67/02<br>C 08 L 51/08 |
| A | US - A - 4 775 712 (SASAKI et al.) * Ansprüche; Spalte 5, Zeilen 35-43 * -- | 1,3, 8-10 | |
| A | EP - A2 - 0 208 940 (GENERAL ELECTRIC COMPANY) * Ansprüche; Seite 21 Zeilen 8-31 * ---- | 1,8-10 | |

RECHERCHIERTE SACHGEBIETE (Int. Cl.5)

C 08 L 67/00
C 08 L 51/00

Der vorliegende Recherchenbericht wurde für alle Patentansprüche erstellt.

| Recherchenort | Abschlußdatum der Recherche | Prüfer |
|---|---|---|
| WIEN | 02-02-1990 | WEIGERSTORFER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument